# EUROPEAN PATENT APPLICATION

(11) **EP 4 835 270 A1**
(43) Date of publication of application: **04.11.2026**
(21) Application number: 26175444.4
(22) Date of filing: 29.04.2026
(51) Int. Cl.: F01N 3/20, F01N 11/00

(54) **AN APPARATUS FOR REDUCING NOX EMISSIONS IN AN ENGINE EXHAUST GAS STREAM OF AN ENGINE SYSTEM**

(30) Priority: 30.04.2025 NL 2040289
(71) Applicant: DAF Trucks N.V., 5643 TW Eindhoven (NL)
(72) Inventor: DEGENHART, Rutger Boudewijn, 5643 TW Eindhoven (NL); BALENOVIC, Mario, 5643 TW Eindhoven (NL); VAN SCHIJNDEL, Jos, 5643 TW Eindhoven (NL)
(74) Representative: V.O.

(57) **Abstract**

The invention relates to an apparatus for reducing NOx emissions in an engine exhaust gas stream of an engine system. A nominal selective catalytic reduction model is configured to determine an NH3 storage estimate of the selective catalytic reduction unit based on the engine-out NOx, temperature and exhaust gas mass flow. An exhaust fluid storage controller is configured to determine a nominal amount of diesel exhaust fluid to be added to the exhaust gas stream by the diesel exhaust fluid doser, the exhaust fluid storage controller provided with the NH3 storage estimate of the nominal selective catalytic reduction model. A tailpipe processing module is configured to determine a sensed amount of NOx or NH3 exiting the selective catalytic reduction unit by the tailpipe NOx sensor; the tailpipe processing module further comprising an NH3 slip estimation unit of excess NH3 exiting the selective catalytic reduction unit; and a storage correction module is configured to determine a corrective amount of diesel exhaust fluid to be added by the diesel exhaust fluid doser to the exhaust gas stream to correct an NH3 storage of the selective catalytic reduction unit based on the determined amount by the tailpipe processing module of NOx or NH3 exiting the selective catalytic reduction unit.

## Description

### INTRODUCTION

The invention relates to an apparatus and method for reducing NOx emissions in an engine exhaust gas stream of an engine system, more in particular including Selective Catalytic Reduction (SCR) systems by accurately managing ammonia (NH3) storage and dosing. Generally, such a system incorporates an exhaust fluid storage controller to dynamically adjust NH3 dosing based on real-time measurements. Additionally, it employs a storage correction module that applies an NH3 correction factor to compensate for NH3 cross-sensitivity in NOx sensors, ensuring accurate NOx measurements. A reductant target module determines the amount of reductant injection required.

Internal combustion engines, particularly those used in heavy-duty applications, are challenged to comply with increasingly stringent emissions regulations that limit the release of nitrogen oxides (NOx) into the atmosphere. To achieve compliance, modern exhaust after-treatment systems commonly employ Selective Catalytic Reduction (SCR) technology. SCR utilizes a catalyst to convert NOx into nitrogen (N2) and water (H2O) through a reduction reaction with ammonia (NH3) introduced into the system in the form of Diesel Exhaust Fluid (DEF), also known as AdBlue, which is dosed into the exhaust stream by a urea injection system.

A key aspect of SCR operation is the ability of the catalyst to store NH3, which enhances NOx conversion efficiency. The NH3 storage capacity of the SCR catalyst varies with temperature-greater storage occurs at lower temperatures, while at higher temperatures, stored NH3 may be released from the catalyst. To mitigate this, an NH3 Oxidation Catalyst (AMOx) is often placed downstream of the SCR to oxidize excess NH3 and prevent NH3 emissions, commonly referred to as "NH3 slip."

The upcoming regulations introduce even lower NOx limits, reducing permissible NOx emissions to extreme low levels. These stricter limits impose significant challenges on SCR control strategies. To meet these requirements, the SCR catalyst must maintain high NH3 storage to maximize NOx conversion efficiency.

US20100024393A1 discloses a feedback control system for SCR catalyst that improves NOx reduction efficiency by utilizing a storage correction module to compensate for NH3 cross-sensitivity in NOx sensors. The invention describes a tailpipe processing module, and an exhaust fluid storage controller, which work together to dynamically adjust NH3 dosing. Additionally, the publication details the use of the storage correction module that applies an NH3 correction factor to the storage condition of the SCR catalyst, ensuring accurate NOx sensor readings even in the presence of NH3 slip.

Such a conventional SCR control may rely on an embedded SCR Model, also known as nominal selective catalytic reduction model that tracks NH3 storage levels over the catalyst and adjusts dosing to maintain a predefined storage target based on SCR temperature and mass flow . However, the system can be susceptible to input biases and sensor drift, which may cause deviations between the nominal model storage, i.e. a storage calculated by the nominal model based on sensor inputs, and an actual storage. This can lead to suboptimal NOx conversion and increased emissions. To address these challenges, an improved NOx control strategy is required to improve for sensor accuracy, compensate for system biases, and ensure stable long-term operation under the new regulatory framework.

In one aspect the invention aims to provide a more stable execution of the storage correction module, wherein the risk of overshooting or undershooting a corrective action is reduced.

In another aspect the invention aims to provide a more accurate feedback process of the tailpipe processing module, that can improve the corrective amounts of diesel exhaust fluid to be added by the diesel exhaust fluid doser to the exhaust gas stream.

### SUMMARY OF THE INVENTION

According to an aspect, the invention concerns an apparatus for reducing NOx emissions in an engine exhaust gas stream of an engine system, comprising a selective catalytic reduction unit. The selective catalytic reduction unit comprises a selective reduction catalyst and at least a tailpipe NOx sensor in the tailpipe out exhaust gas stream. A diesel exhaust fluid doser is fluidly coupled to a diesel exhaust fluid storage and is configured to provide diesel exhaust fluid added to the exhaust gas stream to increase an NH3 storage of the selective catalytic reduction unit. A nominal selective catalytic reduction model is configured to determine an NH3 storage estimate of the catalyst in the selective catalytic reduction unit based on the engine-out NOx sensor, temperature sensor in front of the SCR and exhaust gas mass flow. An exhaust fluid storage controller is configured to determine a nominal amount of diesel exhaust fluid to be added to the exhaust gas stream by the diesel exhaust fluid doser. The exhaust fluid storage controller is provided with the NH3 storage estimate of the nominal selective catalytic reduction model. A tailpipe processing module is configured to determine a sensed amount of NOx or NH3 exiting the selective catalytic reduction unit by the tailpipe NOx sensor; the tailpipe processing module further comprising an NH3 slip estimation unit of excess NH3 exiting the selective catalytic reduction unit. A storage correction module is configured to determine a corrective amount of diesel exhaust fluid to be added by the diesel exhaust fluid doser to the exhaust gas stream, to correct an NH3 storage of the selective catalytic reduction unit based on the determined amount by the tailpipe processing module of NOx or NH3 exiting the selective catalytic reduction unit.

The storage correction module comprises program logic programmed to calculate a storage error of the selective catalytic reduction unit; determine a corrective amount of diesel exhaust fluid to be added by the diesel exhaust fluid doser to the exhaust gas stream to correct an NH3 storage of the selective catalytic reduction unit based on the determined amount by the tailpipe processing module of NOx or NH3 exiting the selective catalytic reduction unit wherein the storage correction module comprises a program logic programmed to calculate a storage error of the selective catalytic reduction unit; initiate a measurement time window when the tailpipe NOx sensor signal exceeds a first threshold and accumulate, during the measurement time window, a quantity representative of NOx and/or NH3 emissions; close the measurement time window when the tailpipe NOx sensor signal falls below the first threshold or when a predetermined condition is met; calculate a discrete corrective amount of diesel exhaust fluid based on the accumulated quantity representative of NOx and/or NH3 emissions over the measurement time window, to be added by the diesel exhaust fluid doser to the exhaust gas stream and to calculate continuous correction factor applied to the nominal dosing amount; wherein the continuous correction factor is updated after closing of the measurement time window based on the calculated storage error and an amount of diesel exhaust fluid dosed during a preceding interval; and wherein the discrete corrective amount is injected after a measurement time window, based on the calculated storage error.

The storage correction module may be a module that can be calibrated independently from the nominal selective catalytic reduction model, and is able to quickly address sensor biases or system drift. In addition the dosing accuracy level improves. It finds a good balance between measuring long enough to get an accurate tailpipe measurement (window based batch mode), but short enough to quickly improve emissions.

The storage correction module is rendered more stable by splitting the corrective amount of diesel exhaust fluid to be added by the diesel exhaust fluid doser to the exhaust gas stream into a temporary bias amount (STC, short term correction) and persistent bias amount (LTT, long term trim). It can deal with both temporary as well as persistent biases.

### BRIEF DESCRIPTION OF THE FIGURES

Figure 1 shows a schematic embodiment of an apparatus for reducing NOₓ emissions in an engine exhaust gas stream of an engine system;
Figure 2A and 2B disclose details of a tailpipe processing module;
Figure 3 further illustrates operational windows of the ATP module;
Figure 4A shows in more detail an SCR unit;
Figure 4B illustrates an embodiment of the SCR feedback control system;
Figure 5A, shows an example of tailpipe processing based on defined tailpipe states;
Figure 5B illustrates the role of a storage delta check module within the SCR feedback control system
Figure 6 shows schematic diagrams of biased NH3 slip;
Figure 7 shows a prolonged NH3 slip with multiple flags;
Figure 8 shows intended behaviour on NOx slip;
Figure 9 shows a diagram having ATP processing and SDC checking integrated.

### DETAILED DESCRIPTION OF THE INVENTION

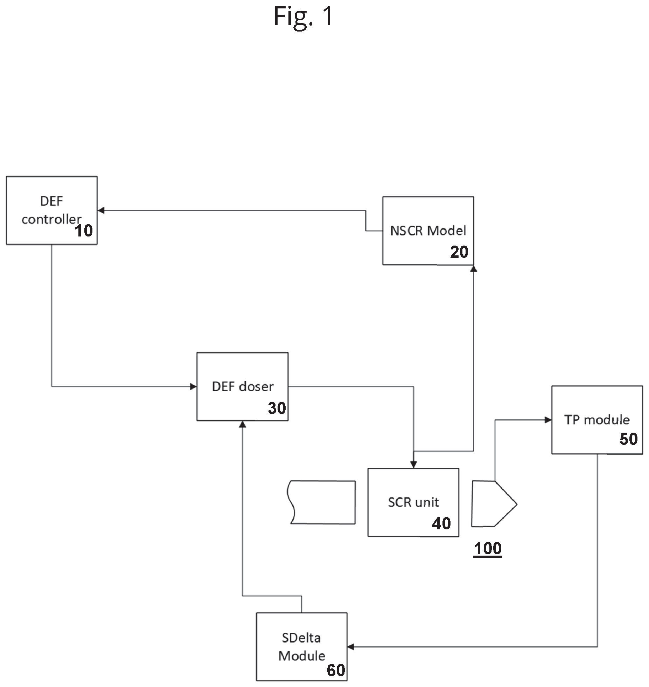

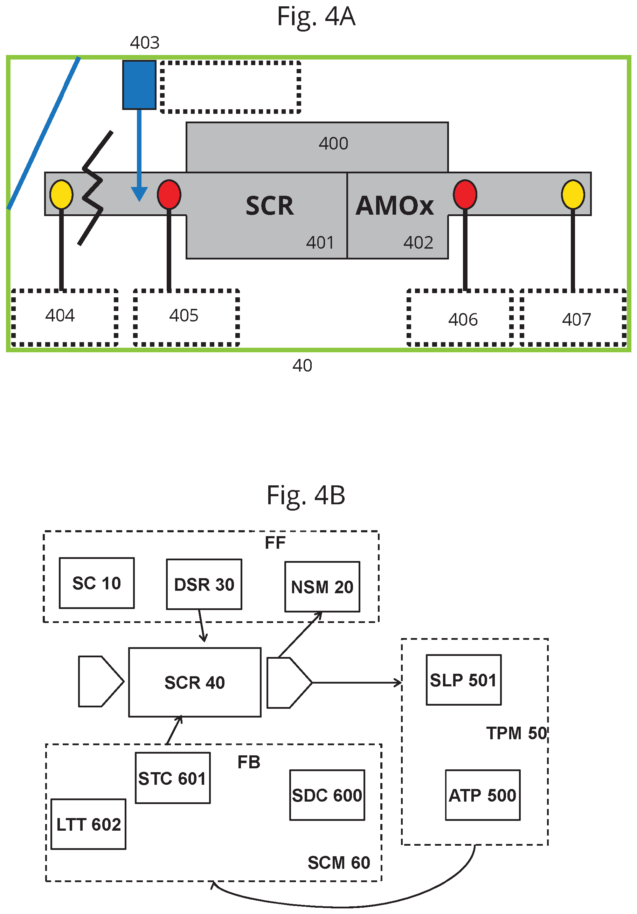

Referring now to Figure 1, an apparatus for reducing NOₓ emissions in an engine exhaust gas stream of an engine system is disclosed according to a typical prior art schedule. The apparatus comprises an exhaust system 100, which includes a selective catalytic reduction (SCR) unit 40, positioned within the exhaust stream of system 100. SCR unit 40 comprises a selective reduction catalyst an optional tailpipe temperature sensor or other mechanism to determine or calculate a tailpipe temperature; and a tailpipe NOₓ sensor, positioned in the tailpipe out exhaust gas stream (See Figure 4A). A diesel exhaust fluid (DEF) doser 30 is fluidly coupled to a diesel exhaust fluid storage and is configured to introduce diesel exhaust fluid (DEF) into the exhaust gas stream to increase the NH₃ storage of the SCR unit 40.

To enable precise control of ammonia dosing, the system is equipped with a nominal SCR (NSCR) model 20, which determines an NH₃ storage estimate of the catalyst within the SCR unit 40. This estimation is derived based on input signals from an engine-out NOₓ sensor, the temperature sensor in front of the SCR, and exhaust gas mass flow data. The DEF controller 10, functioning as an exhaust fluid storage controller, receives the NH₃ storage estimate from the nominal SCR model 20 and determines the nominal amount of DEF to be introduced into the exhaust gas stream by the DEF doser 30.

The DEF controller 10 outputs a nominal dosing command, and the nominal SCR model 20 estimates the NH3 storage, and tailpipe emissions of NOₓ and NH₃. To achieve this, a kinetic parameter storage model can be used which is known in the art.

A primary function of the DEF controller 10 is the generation of a storage target and a storage estimate. The storage target is mainly a function of SCR temperature and potentially also mass flow. Generally, the higher the SCR temperature, the lower the storage target, as the SCR storage capacity decreases with increasing temperature. The storage estimate is an output from the nominal SCR model 20, which continuously tracks the amount of NH₃ storage present on the SCR catalyst. NH₃ is adsorbed when new NH₃ enters the SCR following the decomposition of DEF. Stored NH₃ is desirable for NOₓ conversion but can desorb in the case of a temperature increase, which means NH₃ storage is limited to temperature constraints. NH₃ storage is further influenced by the amount of DEF dosing, engine-out NOₓ concentration, exhaust mass flow, and system temperatures.

The difference between the storage estimate and storage target is the storage error. The goal of a feedforward (FF) controller in the DEF controller 10 is to minimize this error. A simple controller, such as a proportional (P) controller, may convert the storage error into a DEF dosing command using the formula: $FF_cmd \left(ml/s\right) = gain * storage error$

A higher gain allows for faster tracking of the target but also increases the risk of overshoot.

While the nominal SCR model 20 attempts to predict ammonia storage conditions accurately, practical factors such as sensor drift, system aging, and transient operating conditions introduce uncertainties. Therefore, the storage of the actual SCR will deviate from the nominal SCR model storage, resulting in NOx or NH3 emissions.

To address these challenges, tailpipe sensor module 50 may be incorporated into the system. The tailpipe sensor module 50 comprises a tailpipe NOₓ sensor and a tailpipe processing module, responsible for determining the sensed amount of NOₓ or NH₃ exiting the SCR unit 40. Additionally, the tailpipe processing module may include an NH₃ slip estimation unit, which processes signals from both the engine-out NOₓ sensor and the tailpipe NOₓ sensor 50, among other inputs, to determine whether the measured emissions correspond to NOₓ residue (indicating underdosing) or NH₃ slip (indicating overdosing).

NOₓ sensors may be cross-sensitive to NH₃, meaning that a NOₓ sensor detects both NOₓ and NH₃. Accurate detection of NH₃ slip in the tailpipe is important to correctly assess system state. If NH₃ slip is not accurately detected, the tailpipe signal may be misinterpreted as NOₓ, leading to an incorrect DEF dosing.

The tailpipe processing module within the tailpipe sensor module 50 uses an NH₃ slip estimation algorithm to differentiate between NOₓ and NH₃ in the tailpipe emissions. This is achieved using an NH₃ flag signal, which signals whether the measured tailpipe sensor value represents NH₃. If the NH₃ flag is not raised, the tailpipe signal is interpreted as NOₓ.

For a negative storage bias, the feedback controller compares the actual SCR efficiency to the modeled SCR efficiency. For a positive storage bias, it compares NH₃ slip in the actual SCR unit 40 to the NH₃ slip prediction from the nominal SCR model 20, referred to as Model AMOx Out NH₃ i.e. the gas stream exiting SCR unit 40, in particular its ammonium oxidizer.

The nominal SCR model 20 may directly output predicted NOₓ and NH₃ tailpipe emissions, for example named Model AMOx Out NOₓ and Model AMOx Out NH₃, respectively. The NH₃ estimation algorithm within the tailpipe sensor module 50 provides a Trust Factor, indicating the reliability of distinguishing NH₃ from NOₓ, and an NH₃ Flag, which signals when the tailpipe NOₓ sensor value should be interpreted as NH₃.

To further enhance accuracy, a storage correction module 60 processes the measured tailpipe data and calculates a corrective amount of DEF to be added by the DEF doser 30 in a feedback control loop, additional to the feedforward control of the DEF controller 10. Depending on implementation, the feedback loop can be integrated in a status update of nominal SCR model 20, which leads to corrected nominal values of Model AMOx Out NOₓ and Model AMOx Out NH₃, respectively. Alternatively the nominal values may remain unchanged, but storage correction module 60 may directly control DEF controller 10 or DEF doser 30 to provide the corrective amount of DEF to be added by the DEF doser 30 additional to the dosing amount prescribed by the nominal SCR model 20. This correction compensates for deviations in the NH₃ storage of the SCR unit 40, promoting that ammonia dosing remains optimal for NOₓ reduction while minimizing NH₃ slip. In some embodiments, the invention relates to an apparatus for reducing NOx emissions in an engine exhaust gas stream of an engine system, comprising:
- a selective catalytic reduction unit 40 comprising a selective reduction catalyst and a tailpipe NOx sensor in the tailpipe out exhaust gas stream;
- a diesel exhaust fluid doser 30 fluidly coupled to a diesel exhaust fluid storage, the diesel exhaust fluid doser configured to provide diesel exhaust fluid added to the exhaust gas stream to increase an NH3 storage of the selective catalytic reduction unit;
- a nominal selective catalytic reduction model 20 configured to determine an NH3 storage estimate of the selective catalytic reduction unit and NOx and NH3 estimates exiting the selective catalytic reduction unit based on the engine-out NOx , exhaust temperature and exhaust gas mass flow;
- an exhaust fluid storage controller 10 configured to determine a dosing amount of diesel exhaust fluid to be added to the exhaust gas stream by the diesel exhaust fluid doser, the exhaust fluid storage controller provided with the NH3 storage estimate of the nominal selective catalytic reduction model;
- a tailpipe processing module 50 configured to determine a sensed amount of NOx or NH3 exiting the selective catalytic reduction unit by the tailpipe NOx sensor; the tailpipe processing module further comprising an NH3 slip estimation unit 501 of excess NH3 exiting the selective catalytic reduction unit; and
a storage correction module 60 as part of storage correction module 10 or nominal model 20 or diesel exhaust fluid doser 30, configured to provide a corrected amount of diesel exhaust fluid to be added by the diesel exhaust fluid doser to the exhaust gas stream to correct an NH3 storage of the selective catalytic reduction unit based on the determined amount by the tailpipe processing module of NOx or NH3 exiting the selective catalytic reduction unit wherein the storage correction module comprises of a program logic programmed to calculate a storage error of the selective catalytic reduction unit; to calculate a short term corrective amount of diesel exhaust fluid to be added by the diesel exhaust fluid doser to the exhaust gas stream and to calculate a long term corrective amount of diesel exhaust fluid to be added by the diesel exhaust fluid doser to the exhaust gas stream; wherein the long term corrective amount is provided by continuous dosing; and wherein the short term corrective amount is injected after a measurement time window, based on the calculated storage error.

By integrating model-based control with real-time sensor feedback, these systems can dynamically optimize ammonia dosing strategies, mitigate storage errors and adapting to fluctuating exhaust conditions. The combination of the nominal SCR model 20, tailpipe sensor module 50, and storage correction module 60 enables a robust and adaptive SCR control strategy, ensuring high-efficiency NOₓ conversion while preventing excessive NH₃ slip within the exhaust system 100.

The present invention introduces a novel feedback control concept that provides sustained NOₓ compliance while maintaining NH₃ slip at a manageable level.

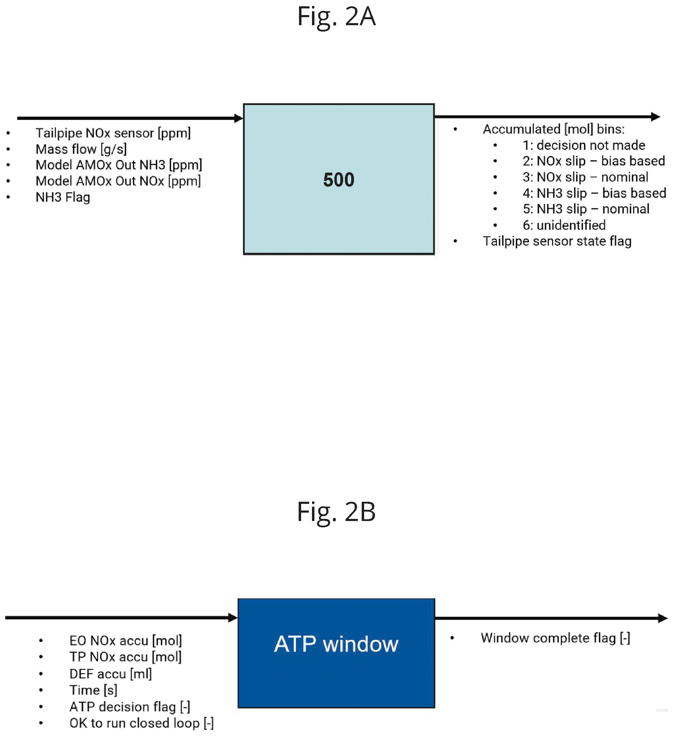

In connection with Figure 2 and 3 and 4B, an advanced tailpipe processing (ATP) module 500 is disclosed within the tailpipe processing module 50, which operates using a window-based approach to analyze the tailpipe NOₓ sensor signal. ATP module 500 accumulates tailpipe NOₓ and NH₃ measurements over a measurement time window and processes these values to determine corrective dosing adjustments. By incorporating a window-based batch mode approach and leveraging real-time sensor feedback, the system provides a more stable and adaptive dosing strategy, effectively compensating for short-term sensor inaccuracies and improving overall emission control performance.

As shown in Figure 2A tailpipe processing module 50 may include a plurality of bin memories, each assigned to store an accumulated molar amount of tailpipe NOₓ and/or NH₃, derived from the tailpipe NOₓ sensor signal during a measurement time window. The plurality of bin memories includes at least:
- a temporary bin, which initially stores the accumulated molar amounts of NOₓ and NH₃ during a measurement period,
- an NOₓ error bin, which stores values allocated from the temporary bin if an NH₃ slip condition is not detected, and
- an NH₃ error bin, which stores values allocated from the temporary bin if an NH₃ slip condition is determined by the NH₃ slip estimation unit of the tailpipe sensor module 50.

Furthermore, a NOx slip bin may be provided that is calculated by the nominal model, NOx slip - nominal, and as such is not in need for compensation by the storage correction module 60. Similarly such a bin may be provided for nominal NH3 slip. A tailpipe sensor state flag may be in a measurement phase, or in an inactive phase.

Figure 2B further details the tailpipe processing window, which ends with a 'complete' flag after a 'decision' state is reached, wherein based on engine out NOx and tailpipe out NOx emissions and an accumulated amount of dosing fluid.

During the measurement time window exemplified in Figure 2B, the accumulated molar amount in the temporary 1 bin is assigned an NOₓ error bin or the NH₃ error bin, which is decided based on the presence of an NH₃ slip condition, determined using the NH₃ flag of the NH₃ slip estimation unit. Multiple bin memories may be retained for further processing.

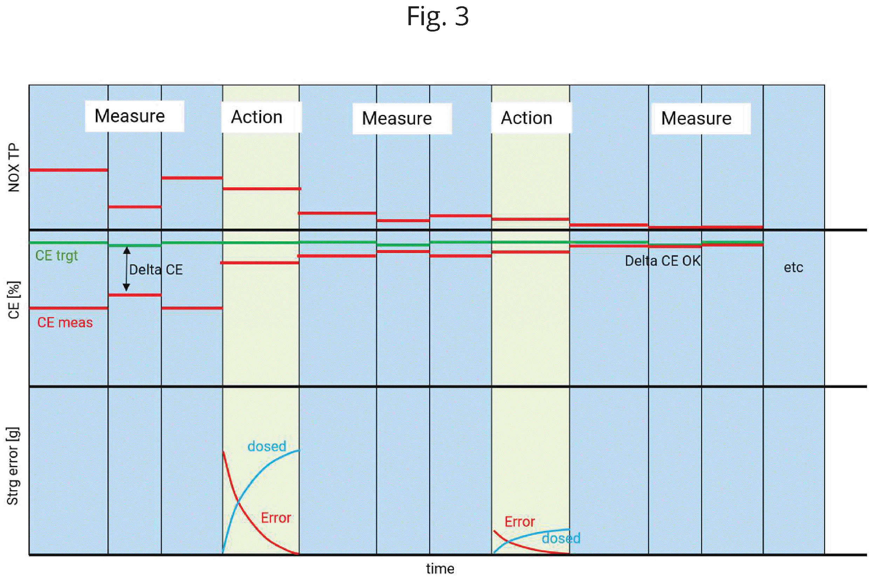

Figure 3 further illustrates that the ATP module operates only during the "MEASURE" state, a phase in which tailpipe measurements are actively collected and processed. Once the measurement time window is closed, the storage correction module 60 determines a corrective amount of diesel exhaust fluid to be added by the DEF doser 30, based on the stored molar amounts in any of the plurality of bin memories. In the ACTION phase, a corrective amount compensates for deviations in dosing efficiency and ensures that the NH₃ storage condition of the SCR unit 40 remains within an optimal range for NOₓ reduction. More in particular, storage correction module 60 comprises program logic programmed to calculate a storage error of the selective catalytic reduction unit; to calculate a short term corrective amount of diesel exhaust fluid to be added by the diesel exhaust fluid doser to the exhaust gas stream and to calculate a long term corrective amount of diesel exhaust fluid to be added by the diesel exhaust fluid doser to the exhaust gas stream; wherein the long term corrective amount is provided by continuous dosing; and wherein the short term corrective amount is injected after a measurement window, based on the calculated storage error.

To enhance accuracy and ensure optimal NOₓ conversion, the system may operate in batch mode, accumulating emissions data over a predefined measurement window before applying corrective actions. During the MEASURE state, SCR efficiency and NH₃ slip are evaluated. If emissions exceed a predefined threshold, the system transitions to the ACTION state, where the controller modifies the DEF dosing strategy by either increasing or decreasing dosing based on the deviation detected. The magnitude of the corrective adjustment may be tracked within the SDelta module 60, in particular, resulting in a short term correction dose. Once the correction is applied, the system returns to the MEASURE state, and the cycle repeats. This iterative batch mode operation prevents unnecessary dosing fluctuations and improves NOₓ conversion efficiency while mitigating NH₃ slip.

The tailpipe sensor module 50 processes the tailpipe NOₓ sensor signal using aforesaid bin-based classification methodology to ensure accurate separation of NOₓ and NH₃ slip contributions. For example, in an undecided state, the sensor signal is collected and later attributed to one of the bins that is referenced after a correct determination whether the signal concerned NH3 slip or excess NOx. The module 50 includes a temporary bin, which accumulates tailpipe NOₓ sensor data until a classification determination is made. According to one aspect of the invention, once the NH₃ slip condition is determined by the NH₃ slip estimation unit, the temporary bin is reset to prevent the retention of outdated measurement data. After the measurement window closes, all accumulated data in the plurality of bin memories may be reset to ensure that each new window begins with fresh data, eliminating bias from prior measurements.

The tailpipe processing module within the tailpipe sensor module 50 may be provided with program logic that executes the following sequence: first, a measurement time window is initiated when the tailpipe NOₓ sensor signal exceeds a first threshold. During this window, the tailpipe NOₓ sensor signal is accumulated within the temporary bin. If, during this period, an NH₃ slip condition is identified by the NH₃ slip estimation unit, the tailpipe NOₓ sensor signal from the temporary bin is allocated to an NH₃ error bin, and subsequent sensor data continues accumulating in the NH₃ error bin. Alternatively, if the tailpipe NOₓ sensor signal exceeds a second threshold without an NH₃ slip condition being detected, the temporary bin data is allocated to an NOₓ error bin instead. The measurement time window remains open until either the tailpipe NOₓ signal drops below the first threshold or a predetermined amount of time has elapsed. At this point, the storage correction module 60 may be triggered, executing a corrective adjustment to the DEF dosing rate based on the accumulated emissions data.

To facilitate integration with the model-based control system, NOₓ and NH₃ signals from both the tailpipe NOₓ sensor and the nominal SCR model 20 can be converted from concentration values in parts per million (ppm) to a molar flow rate (mol/s) using the equations: ${NO}_{x} \left[mol/s\right] = {NO}_{x} concentration \left[ppm\right] \times mass flow \left[g/s\right] \times C_u$ ${NH}_{3} \left[mol/s\right] = {NH}_{3} concentration \left[ppm\right] \times mass flow \left[g/s\right] \times C_u$ where C_u = 3.448 × 10⁻⁸ is a conversion constant based on the molar mass of exhaust gases. The first equation applies to both the tailpipe NOₓ sensor signal and the Model AMOx Out NOₓ prediction, while the second equation is used when the NH₃ Flag is raised, signifying that the tailpipe NOₓ sensor signal represents NH₃ rather than NOₓ, and using it for Model AMOx Out NH3..

Figure 4a shows in more detail an SCR unit 400 as part of the previous disclosure. The unit 400 may include an ammonia oxidation catalyst AMOx 402, positioned downstream of the SCR catalyst 401, which oxidizes residual NH₃ slip, converting it into harmless emissions before release. This oxidizer provides an additional mechanism for reducing NH₃ emissions that escape SCR conversion, complementing the primary NOₓ and NH₃ slip mitigation strategies. SCR 40 of the SCR catalyst, an ammonia oxidation (AMOx) unit, and a DEF doser 403. It includes multiple sensors such as the engine-out NOₓ (EONOx) sensor 407, the SCR outlet NOₓ (SONOx) sensor 404, and mass flow and temperature sensors (Tin 405 and Tout 406) to monitor system performance.

Figure 4B illustrates an embodiment of the SCR feedback control system, providing an overview of the interactions between system components and their respective functions in managing NOₓ reduction and NH₃ slip control. A doser DSR 30 provides dosing fluid to the SCR catalyst. Sensor values are provided to the NSM model 20 and TPM module 50. The Storage Controller (SC) 10 receives temperature inputs and calculates the storage target for the SCR catalyst in SCR unit 40. It outputs a feedforward (FF) dosing command that serves as an initial estimate for DEF injection. Nominal SCR Model (NSM) 20 predicts ammonia storage conditions, and generates expected NOₓ and NH₃ emissions (Model AMOx Out NOₓ and Model AMOx Out NH₃) under nominal operating conditions. These values serve as reference points for detecting deviations in actual emissions. Dosing Limiters regulate the DEF injection process by ensuring that dosing adjustments remain within predefined operational boundaries.

A NH₃ Slip Estimation Unit (SLP) 501, part of the tailpipe sensor module (TPM) 50, receives input from the SONOx 407 and EONOx 404 sensors and determines the presence of NH₃ slip. It outputs an NH₃ flag and a trust factor to indicate confidence in the classification of emissions. The Advanced Tailpipe Processing (ATP) Module 500, also part of Tailpipe Sensor Module 50, classifies tailpipe emissions based on input signals from the sensors and model predictions as discussed previously. It accumulates tailpipe NOₓ and NH₃ measurements over a measurement time window and processes these values to determine corrective dosing adjustments. It determines whether emissions should be assigned to NOₓ or NH₃ and directs them accordingly.

Additionally, the NH₃ slip estimation algorithm may provide a Trust Factor, which quantifies the confidence level in correctly distinguishing NH₃ from NOₓ. For example, a trust factor of 0 indicates no confidence, while a trust factor of 1 indicates full confidence. This trust factor can be used in storage correction module 60 to accept or reject specific measurement windows. For example, if the trust factor is low, it may be preferable to defer feedback corrections and wait for a window with a higher trust factor rather than making incorrect adjustments that could increase the storage error instead of reducing it.

The storage delta check module (SDC) 600, as part of the Storage Correction module (SCM) 60, verifies the storage balance within the SCR system. It determines corrective DEF dosing adjustments based on accumulated NOₓ and NH₃ errors and ensures that dosing levels are maintained within optimal limits. Short-Term Correction (STC) Module 601 processes storage error data and calculates immediate dosing corrections based on deviations detected in NOₓ or NH₃ emissions. The correction factor (Δstor(k)) is applied to adjust DEF injection rates dynamically. A Long-Term Trim (LTT) Module 602 refines dosing strategies over extended operational periods, ensuring gradual optimization of the DEF injection process based on long-term performance trends.

The storage correction module 60 can be designed to operate independently from the nominal SCR model 20 and can be calibrated separately, allowing it to rapidly adapt to sensor biases and system drift without requiring extensive recalibration of the primary SCR model.

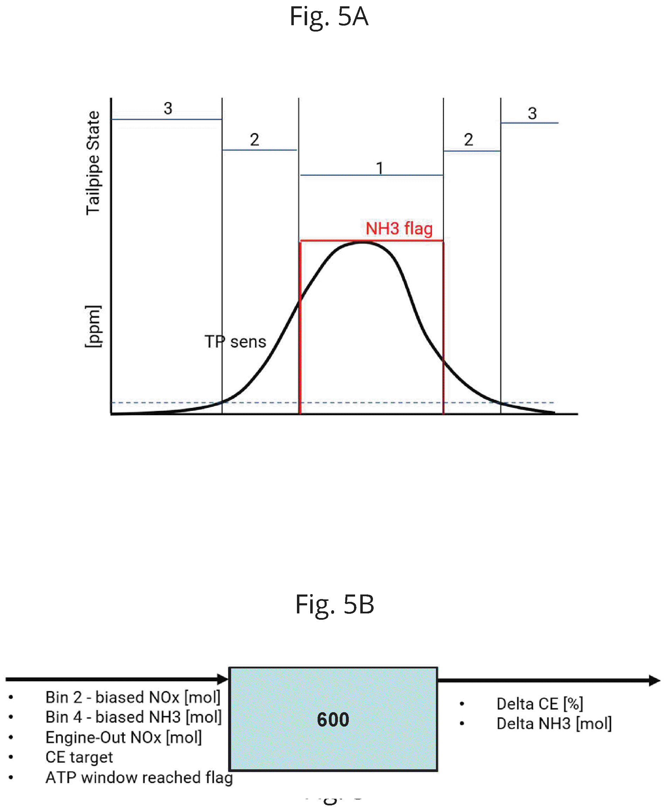

Referring now to Figure 5a, by way of example tailpipe processing (ATP) module 500 operates based on three defined tailpipe states. The state of the system depends on the tailpipe NOₓ sensor signal and the NH₃ Flag status. In Tailpipe State 3, the tailpipe NOₓ sensor signal is below a lower threshold (e.g., less than 1 ppm), indicating no emissions, and no processing occurs. In Tailpipe State 2, the tailpipe NOₓ sensor signal exceeds a higher threshold (e.g., greater than 2 ppm), but the NH₃ Flag is off, meaning emissions are present but their composition is uncertain. In this state, emissions are tracked but not yet assigned to NOₓ or NH₃. In Tailpipe State 1, the NH₃ Flag is on, confirming that the emissions detected by the tailpipe NOₓ sensor are NH₃, allowing direct assignment of the sensor signal to an NH₃ bin.

A tailpipe event is defined as a transition in the ATP tailpipe state from State 3 to either State 1 or State 2 and then back to State 3. During this state transition:
- If an NH₃ Flag was set at any point (State 1), the complete NOₓ sensor signal during the event is assigned to an NH₃ bin.
- If no NH₃ Flag was set, the complete NOₓ sensor signal during the event is assigned to an NOₓ bin.

To refine emissions classification further, the tailpipe NOₓ sensor signal is compared to expected nominal emissions from the nominal SCR model 20. The Model SCR outputs Model AMOx Out NOₓ and Model AMOx Out NH₃, representing the expected tailpipe emissions under nominal, unbiased conditions. The term 'nominal' is here thus used to indicate a control variable before correction of the tailpipe sensor module 50. These predicted values help determine whether actual emissions are expected (nominal) or unexpected (hence: e.g. biased). If emissions are expected, no action is taken, as they result from normal system operation, such as SCR temperature variations affecting conversion efficiency. If emissions are unexpected, the system detects a bias, which may be due to deviations in mass flow estimation, urea dosing errors, or sensor drift, requiring corrective action.

Tailpipe sensor module 50 classifies emissions data using a multi-bin system to distribute the tailpipe NOₓ sensor signal. In a more enhanced embodiment a bin assignment is based on the ATP Tailpipe State and the Model AMOx Out NOₓ and Model AMOx Out NH₃ values as for example:
1a. Temporary bin for tailpipe NOₓ sensor signal before classification.
1b. Temporary bin for Model AMOx Out NOₓ, awaiting classification.
1c. Temporary bin for Model AMOx Out NH₃, awaiting classification.
2. NOₓ Error Bin: Accumulates NOₓ slip not predicted by the model, requiring additional DEF dosing.
3. Nominal NOₓ Bin: Captures expected NOₓ emissions due to low SCR temperature or insufficient NH₃ storage, requiring no corrective action.
4. NH₃ Error Bin: Accumulates NH₃ slip not predicted by the model, requiring a reduction in NH₃ storage.
5. Nominal NH₃ Bin: Captures expected NH₃ slip due to rapid temperature increases, requiring no corrective action.

During operation, emissions data stored in Bin 1a, 1b, and 1c are reassigned based on state transitions. If the tailpipe state moves from 2 to 3, the emissions signal is determined to be NOₓ and is allocated to Bin 2 (unexpected NOₓ slip) and Bin 3 (expected NOₓ slip). If the tailpipe state moves from 2 to 1, the emissions signal is determined to be NH₃ and is allocated to Bin 4 (unexpected NH₃ slip) and Bin 5 (expected NH₃ slip). Once reassigned, temporary bins are reset to zero molar concentration.

The tailpipe processing module 50 also includes program logic to compare the tailpipe NOₓ sensor signal with the nominal NH₃ signal predicted by the nominal SCR model 20. If an NH₃ slip condition is detected, the NH₃ error bin accumulates the difference between the tailpipe NOₓ sensor signal and the nominal NH₃ signal. Execution of the storage correction module 60 is then triggered, applying a negative DEF dosing correction to reduce NH₃ storage and prevent excessive NH₃ slip.

A tailpipe decision-ready flag is set when the system exits Tailpipe State 1 or returns to Tailpipe State 3. This flag signals that a complete measurement window has been processed, allowing for final corrections based on accumulated data. The measurement window is designed to be long enough to capture NH₃ slip events accurately, improving the ability to distinguish between NOₓ and NH₃ emissions over successive cycles.

The NOₓ error in Bin 2 serves as an input to the storage correction module 60, which executes corrective DEF dosing based on the detected bias.

According to one aspect of the invention, as shown in Figure 4b storage delta check module 600, as part of storage correction module 60 comprises program logic configured to calculate a corrected SCR conversion efficiency based on accumulated emissions errors. From the corrected conversion efficiency, the module determines a revised storage error for the SCR unit 40, ensuring that NOₓ conversion remains optimized. Furthermore, the module calculates a storage error based on the NH₃ error stored in Bin 4, allowing adjustments to reduce NH₃ slip. The Delta CE function is mathematically expressed as: $CEdelta = 100 \times \left(1-NOxerror/Engine-Out NOx\right) \left[%\right]$

This equation is applied when NOₓ slip has been identified. For NH₃ slip, the storage error is calculated based on the discrepancy between the measured NH₃ slip and the NH₃ slip predicted by the Nominal SCR Model 20, as follows: $Delta_NH 3 slip = NH 3 slipMeas - NH 3 slipModel \left[mol\right]$

The calculated CE delta, together with the NOₓ flux and SCR temperature, is processed through a three-dimensional lookup table to determine the necessary corrective adjustments. For NH₃ slip, an analogous methodology is applied, but with a separate set of lookup tables specifically designed for NH₃-related corrections. The parameters for NH₃ slip correction include window-averaged NH₃ error, NOₓ flux, and SCR temperature.

The storage delta correction module 60 may further, in a preferred embodiment, comprise program logic programmed to split the corrective amount of diesel exhaust fluid to be added by the diesel exhaust fluid doser 30 to the exhaust gas stream into a long term (LTT) and a short term (STC) corrective amount of diesel exhaust fluid. The long term corrective amount is provided by continuous dosing that is provided as the nominal dosing times a long term correction factor. The short term corrective amount is directly injected as a difference between the calculated storage error after a measurement window.

Accordingly a split is provided between temporary biases and persistent biases. A temporary bias is an input bias that only exists for a limited amount of time. For example, an underestimation of exhaust mass flow in a certain speed/torque-point of the engine map. A persistent bias is a long-term bias that is always present, for example, a drifted engine-out NOₓ sensor that always reads 5% less than the actual engine-out NOₓ.

Accordingly said program logic acts on emissions in the tailpipe in the following ways:
- Short term: a quick add/subtraction of DEF dosing to quickly correct an error.
- Long term: apply a (permanent) gain to the DEF doser to compensate for a bias.

In a scenario where a system has developed a negative persistent bias, the actual storage may be lower than the estimated storage. In a case where only a long-term trim correction is applied following downsides may occur:
1. The system response may be very slow (order of magnitude: hours). It takes a long time to stabilize on good emissions because the developed storage error is not actively compensated.
2. After a long-term correction (LTT), the system will still show NOₓ. This could trigger another LTT update. Eventually, the system may overshoot its ideal storage level.

In a scenario where the storage error is compensated, and no long-term correction is applied the storage error may return, leading to undesired fluctuating behavior. A combination using both a short-term and long-term correction can result in quick and stable performance applying both short-term and long-term corrections to optimize emissions control while maintaining system stability and responsiveness.

The short term correction and long term trim can be applied to the dosing that is going into the Actual SCR unit 40, whereas the Nominal SCR Model 20 will only receive nominal dosing. In equation form, the diesel exhaust fluid doser 30 dosing command follows: $DEF \left[ml/s\right] = nominal dosing * LTT + STC \left(Actual SCR system\right) DEF \left[ml/s\right]$

The short term corrective amount may be aborted in case an NH₃ slip condition is measured. Once the required number of windows is reached in Advanced Tailpipe Processing (ATP), the system state transitions from 'MEASURE' to 'ACTION.' During the 'ACTION' state, the STC adds a certain amount of dosing to the system to bring the storage error back to zero. The storage error from the storage delta check module 600 is converted into a DEF deficit using urea properties such as density and concentration. The short term correction may be limited to a maximum dosing limit to ensure the dosing does not exceed the system's operational constraints. The real dosed DEF amount is tracked to determine the remaining storage error.

During the 'ACTION' state, the delta CE will continue to be checked. If a positive CE delta (indicating a negative bias) was found, but during the 'ACTION' state the delta CE becomes positive again due to NH₃ slip, the ACTION state is immediately aborted to prevent the controller from making an incorrect adjustment. The converse is also true for a positive bias.

For persistent biases, a long term correction (LTT) is applied to maintain the appropriate storage level and prevent recurring errors that could cause fluctuations in dosing. The long term correction factor can be updated after a measurement window, by a correction term that is proportional to the storage error, and inversely proportional to the amount of dosed diesel exhaust fluid since the previous update. In equation form: $LTT \left(i\right) = LTT \left(i-1\right) + \frac{Δ stor \left(i\right) ∗ {k}_{LTT} \left(T,SV,Δstor\right)}{{\int }_{{t}_{Δ stor \left(i-1\right)}}^{{t}_{Δ stor \left(i\right)}} \frac{AdBlue \left(t\right)}{{fct}_{NH 3 toAdBlue}} dt}$ where i represents the instance when delta storage occurs (STC update). Each time the system transitions from MEASURE to ACTION, i increases by one. The gain factor k_LTT is a function of temperature, exhaust flow, and storage error and is calibrated to remain between 0 and 1 to avoid overshooting. Different calibrations are applied for positive and negative storage errors, with separate balance configurations for NOₓ and NH₃ slip.

By continuously monitoring emissions and utilizing model-based comparisons, the system dynamically adjusts DEF dosing to compensate for storage errors. The integration of measured and modeled NOₓ and NH₃ emissions ensures that dosing corrections are applied only when necessary, improving SCR efficiency and minimizing NH₃ slip while maintaining regulatory compliance.

Figure 5B illustrates the role of the storage delta check module 600 within the SCR feedback control system (storage correction module), focusing on the determination of storage errors over Advanced Tailpipe Processing (ATP) measurement windows.

The storage delta check module 600 determines if there is a storage error by integrating engine-out NOₓ emissions and tailpipe NOₓ emissions to calculate an SCR conversion efficiency (CE) for both the Actual SCR and the Nominal SCR Model 20. The difference between the two values is referred to as "Delta CE." This difference, in conjunction with the average SCR bed temperature (measured in degrees Celsius) and the NOₓ flux (measured in grams per second) over the measurement window, quantifies the insufficient amount of NH₃ storage (measured in grams) within the Actual SCR unit 40.

For tailpipe NH₃, the storage delta check module 600 integrates NH₃ emissions over the window. The system calculates the excess NH₃ storage by comparing measured NH₃ slip with the predicted NH₃ slip from the Nominal SCR Model 20. The resulting value represents the surplus NH₃ storage in the Actual SCR unit 40.

The Delta CE function is mathematically expressed as: $CEdelta = 100 \times \left(1-NOxerror/Engine-Out NOx\right) \left[%\right]$

This equation is applied when NOₓ slip has been identified. For NH₃ slip, the storage error is calculated based on the discrepancy between the measured NH₃ slip and the NH₃ slip predicted by the Nominal SCR Model 20, as follows: $Delta_NH 3 slip = NH 3 slipMeas - NH 3 slipModel \left[mol\right]$

The calculated CE delta, together with the NOₓ flux and SCR temperature, is processed through a three-dimensional lookup table to determine the necessary corrective adjustments. For NH₃ slip, an analogous methodology is applied, but with a separate set of lookup tables specifically designed for NH₃-related corrections. The parameters for NH₃ slip correction include window-averaged NH₃ error, NOₓ flux, and SCR temperature.

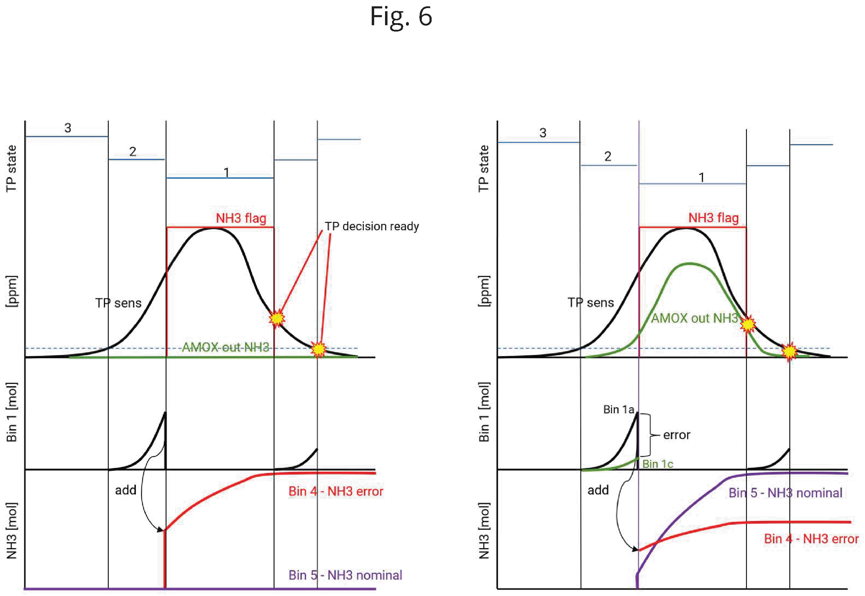

Figures 6-8 show example cases for analyzing tailpipe NOx sensor event, which may be expected or biased NOx peaks, or, depending on the NH3 slip signal, NH3 slip events.

In Figure 6 the left schematic diagram shows a case of biased NH3 slip (Model AMOx Out NH3 is low). The right side shows expected NH3 slip on a nominal system. In this case the majority of the NH3 slip is 'expected' and NH3 slip and will be added to Bin 5. When the Tailpipe State goes from 2 to 1, the species accumulated in Bin 1 will be added to Bin 4 and 5. As earlier explained, a tailpipe decision ready flag is set when either when the system goes out of tailpipe state 1 or when it goes back to 3.

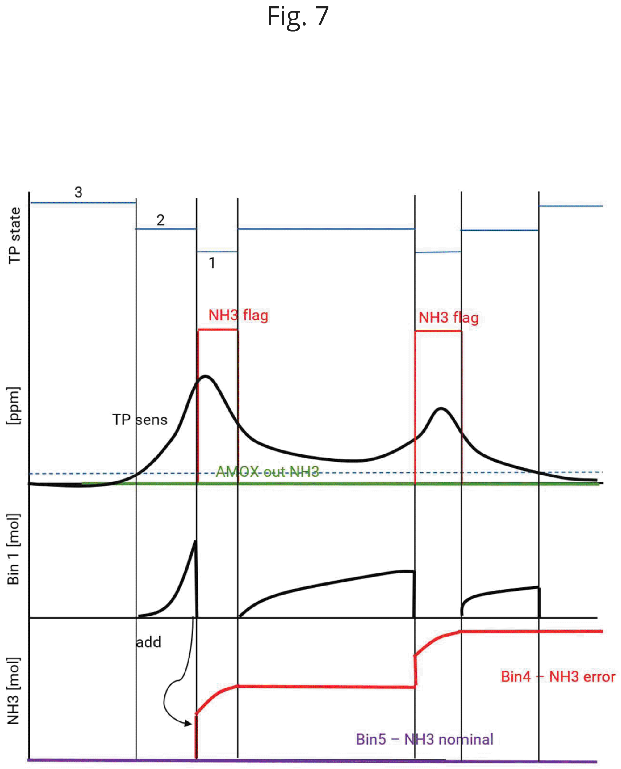

In Figure 7 processing is shown in case of a prolonged NH3 slip with multiple flags.

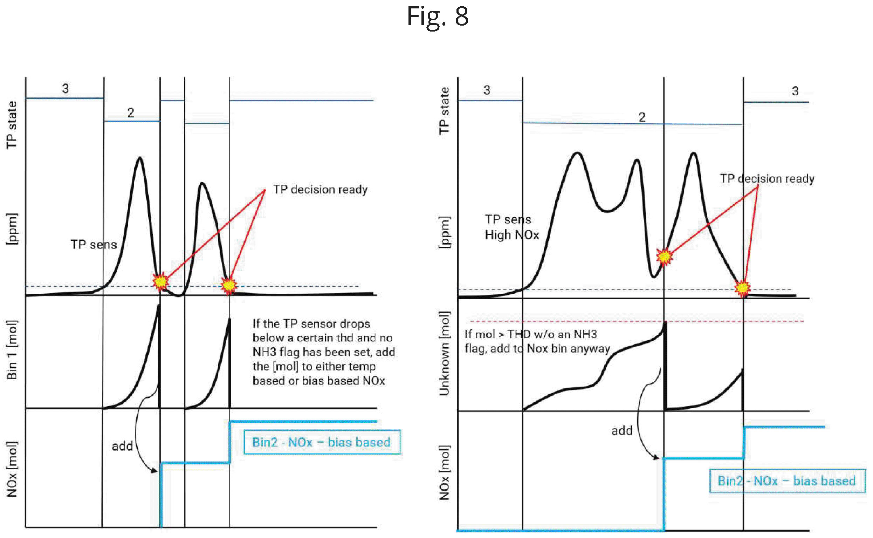

In Figure 8 the intended behaviour on NOx slip is shown. In this case the Bin 1 signal will be added to Bin 4 after the TP signal goes low and no NH3 flag was set. A tailpipe decision ready flag will be set after the NOx peak finished (an no NH3 flag has set during the peak). In other words, when the Tailpipe State goes from 2 to 3. In case of large NOx peaks, the tailpipe decision ready flag can also be set if a calibratable amount of mol has accumulated in Bin 1, to ensure that a flag is set within a certain amount of time and avoid a late decision.

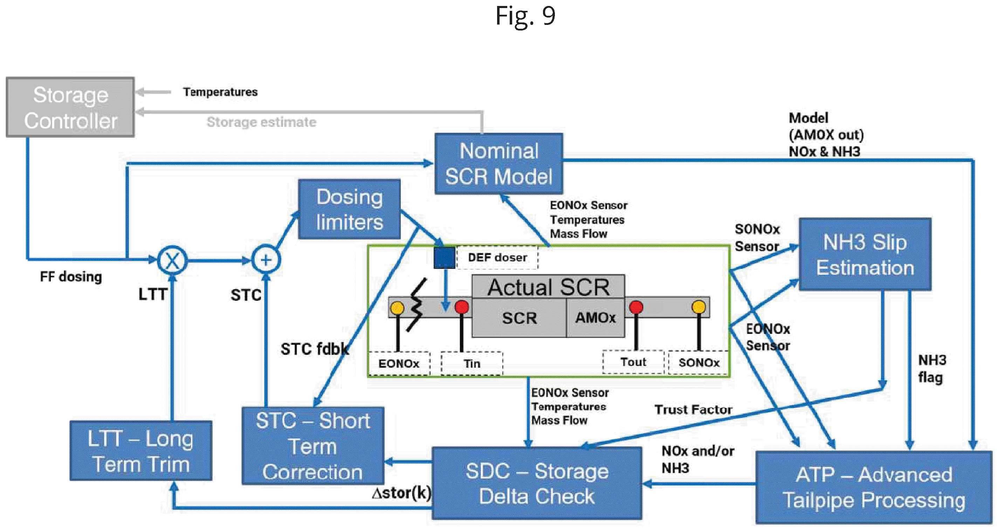

Figure 9 shows a diagram having ATP processing and SDC checking integrated.

## Claims

1. An apparatus for reducing NOx emissions in an engine exhaust gas stream of an engine system, comprising:
- a selective catalytic reduction unit comprising a selective reduction catalyst and a tailpipe NOx sensor in the tailpipe out exhaust gas stream;
- a diesel exhaust fluid doser fluidly coupled to a diesel exhaust fluid storage, the diesel exhaust fluid doser configured to provide diesel exhaust fluid added to the exhaust gas stream to increase an NH3 storage of the selective catalytic reduction unit;
- a nominal selective catalytic reduction model configured to determine an NH3 storage estimate of the selective catalytic reduction unit and NOx and NH3 estimates exiting the selective catalytic reduction unit based on the engine-out NOx , exhaust temperature and exhaust gas mass flow;
- an exhaust fluid storage controller configured to determine a nominal dosing amount of diesel exhaust fluid to be added to the exhaust gas stream by the diesel exhaust fluid doser, the exhaust fluid storage controller provided with the NH3 storage estimate of the nominal selective catalytic reduction model;
- a tailpipe processing module configured to determine a sensed amount of NOx or NH3 exiting the selective catalytic reduction unit by the tailpipe NOx sensor; the tailpipe processing module further comprising an NH3 slip estimation unit of excess NH3 exiting the selective catalytic reduction unit; and
- a storage correction module configured to determine a corrective amount of diesel exhaust fluid to be added by the diesel exhaust fluid doser to the exhaust gas stream to correct an NH3 storage of the selective catalytic reduction unit based on the determined amount by the tailpipe processing module of NOx or NH3 exiting the selective catalytic reduction unit wherein the storage correction module comprises of a program logic programmed to calculate a storage error of the selective catalytic reduction unit; to calculate a short term corrective amount of diesel exhaust fluid to be added by the diesel exhaust fluid doser to the exhaust gas stream and to calculate a long term corrective amount of diesel exhaust fluid to be added by the diesel exhaust fluid doser to the exhaust gas stream; wherein the long term corrective amount is provided by continuous dosing; and wherein the short term corrective amount is injected after a measurement time window for accumulating a quantity representative of NOx and/or NH3 emissions, based on the calculated storage error.

2. The apparatus of claim 1 wherein the long term correction factor is updated after the measurement time window, by a correction term that is proportional to the calculated storage error, and inversely proportional to the amount of dosed diesel exhaust fluid since the previous update.

3. The apparatus of any preceding claim wherein the long term corrective amount of diesel exhaust fluid is calculated as the nominal dosing amount times a long term correction factor.

4. The apparatus of any preceding claim, wherein the short term corrective amount is aborted in case an NH3 slip condition is measured.

5. The apparatus of any preceding claim wherein the short term correction is limited to a maximum dosing limit.

6. The apparatus of any preceding claim wherein the tailpipe processing module comprises a plurality of bin memories including at least a temporary bin, an NOx error bin and an NH3 error bin, each bin memory allocated to store an accumulated molar amount of tailpipe NOx and/or NH3 derived from the NOx sensor signal during the measurement time window, wherein the stored accumulated molar amount of the temporary bin is allocated to either the NOx error bin or the NH3 error bin after determining an NH3 slip condition;

7. The apparatus of any preceding claim, wherein the storage correction module, after closing the measurement time window, calculates a corrective amount of diesel exhaust fluid to be added by the diesel exhaust fluid doser.

8. The apparatus of any of claims 6, wherein the temporary bin is reset after the NH3 slip condition is determined and/or wherein the corrective amount is dependent on the stored molar amount in any of said plurality of bin memories as determined by the storage correction module.

9. The apparatus of any of claims 6- 8 wherein after closing of the measurement time window the plurality of bin memories are reset.

10. The apparatus of claim any of claims 6- 9 wherein said tailpipe processing module comprising program logic arranged to:
- starting the measurement time window when tailpipe NOx sensor signal exceeds a first threshold;
- accumulating the tailpipe NOx sensor signal in the temporary bin; and when the NH3 slip condition is received by the tailpipe processing module from the NH3 slip estimation unit
- allocating the tailpipe NOx sensor signal from the temporary bin to an NH3 error bin and further accumulate the tailpipe NOx sensor signal in the NH3 error bin;
or alternatively,
- allocating the tailpipe NOx sensor signal from the temporary bin to an NOx error bin when the tailpipe NOx signal exceeds a second threshold without receiving the NH3 slip condition from the NH3slip estimation unit; and when the NOx signal is reduced to below the first threshold, or after a predetermined amount of time has passed
- closing the measurement time window by starting the execution of the storage correction module.

11. The apparatus of claim 6 - 10, wherein the tailpipe processing module compares the NOx sensor signal with an expected nominal NOx signal of the nominal selective catalytic reduction model; wherein the NOx error bin accumulates a subtraction of the NOx sensor signal from the nominal NOx signal; and wherein execution of the storage correction module is started to add an additional corrective amount of diesel exhaust fluid to the exhaust gas stream based on the NOx error in the NOx error bin.

12. The apparatus of any preceding claim, wherein the storage correction module comprises program logic to calculate a corrected conversion efficiency of the selective reduction catalyst, and from that corrected conversion efficiency, calculates a storage error of the selective catalytic reduction unit.

13. The apparatus of any preceding claim, wherein the storage correction module comprises program logic to calculate a storage error of the selective catalytic reduction unit based on the NH3 error in the NH3 error bin.

14. The apparatus of claim 6 -13, wherein the tailpipe processing module compares the NOx sensor signal with an expected nominal NH3 signal of the nominal selective catalytic reduction model; wherein, in case of a received NH3 slip signal the NH3 error bin stores a subtraction of the NOx sensor signal from the nominal NH3 signal as NH3 error; and wherein execution of the storage correction module is started to add an additional negative amount of diesel exhaust fluid to the exhaust gas stream based on the stored NH3 error in the NH3 error bin.

15. The apparatus of any preceding claim, wherein the NH3 slip estimation unit is programmed to determine a presence of NH3 in the tailpipe exhaust gas exiting the selective catalytic reduction module based on a trust factor.

16. The apparatus of any preceding claim, comprising an ammonium oxidizer to oxidize said NH3 slip.
